# DEMANDE DE BREVET EUROPEEN

(11) **EP 1 246 052 A1**
(43) Date de publication de la demande: **02.10.2002**
(21) Numéro de dépôt: 01201221.7
(22) Date de dépôt: 29.03.2001
(51) Int. Cl.: G06F 3/14, G09G 3/20

(54) **Dispositif d'affichage électro-optique commandé par des circuits logiques programmables**

(71) Demandeur: ECOLE POLYTECHNIQUE FEDERALE DE LAUSANNE (EPFL), 1015 Lausanne (CH)
(72) Inventeur: Mange, Daniel, 1025 Saint-Sulpice (CH); Stauffer, André, 1400 Yverdon (CH); Tempesti, Gianluca, 1022 Chavannes (CH); Teuscher, Christof, 1007 Lausanne (CH)
(74) Mandataire: Surmely, Gérard

(57) **Abrégé**

Le dispositif électronique d'affichage électro-optique (2) comprend une pluralité de cellules accolées dont les faces supérieures définissent ensemble une surface d'affichage. Chacune desdites cellules comprend une unité d'affichage propre (6), des moyens d'entrée (14) d'au moins une information superposés à ladite unité d'affichage et un circuit logique programmable (20) relié électriquement à l'unité d'affichage et aux moyens d'entrée, ce qui permet un traitement local des données d'entrée et de commande de l'affichage. De plus, chaque circuit logique est relié à plusieurs autres circuits logiques programmables de cellules voisines. De préférence, le circuit logique est relié de manière similaire aux circuits des cellules adjacentes.

## Description

La présente invention concerne un dispositif électronique d'affichage électro-optique comprenant des moyens d'entrée d'informations qui sont superposés au moyen d'affichage. De tels dispositifs permettent une communication interactive avec un utilisateur. Ils peuvent également être utilisés pour d'autres applications, notamment pour l'affichage de paramètres physiques captés par les moyens d'entrée, tels la pression, la lumière ou la température par exemple.

Des affichages interactifs sont déjà connus. On connaît notamment des affichages du type LCD de dimensions fixes qui présentent à leur surface extérieure une couche transparente avec des zones sensibles au toucher (capteurs capacitifs ou résistifs, capteurs de pression) permettant notamment la sélection de certaines fonctions dans un menu de l'affichage LCD. Ces dispositifs comprennent généralement une unité électronique centrale qui gère l'affichage dans son entier et également le traitement des informations reçues en entrée. A titre d'exemple, de tels affichages sont utilisés pour des annuaires électroniques.

Le type d'affichage décrit ci-avant présente divers inconvénients. Premièrement il est généralement dédicacé à une application prédéfinie. Ensuite, pour un modèle donné, les dimensions de l'affichage sont fixes, la structure LCD étant souvent prévue comme une seule unité. Finalement, une défectuosité de l'unité centrale entraîne généralement une panne totale du dispositif, ce qui le rend alors inutilisable.

Le but de la présente invention est de pallier notamment les inconvénients susmentionnés en proposant un dispositif agencé pour permettre un grand nombre d'applications particulières et une grande liberté dans la définition des zones d'entrée d'information. De plus, un autre but de l'invention est de proposer un dispositif d'affichage dont la configuration peut varier et évoluer en fonction des besoins et/ou de l'application sélectionnée. En particulier, il est prévu un dispositif dont les dimensions peuvent être variées aisément et permettre notamment l'implémentation d'une même application dans des dispositifs de dimensions différentes.

Un autre but de la présente invention est de proposer un dispositif qui soit électroniquement robuste, en particulier capable d'autoréparation lors de détériorations locales du dispositif ou de reconfiguration en fonction d'une modification des spécifications.

A cet effet, la présente invention concerne un dispositif électronique d'affichage comprenant une pluralité de cellules accolées dont les faces supérieures définissent ensemble une surface d'affichage ayant chacune une unité d'affichage électro-optique, des moyens d'entrée d'au moins une information superposés à ladite unité d'affichage et un circuit logique programmable associé à des premiers moyens de connexion électriques à ladite unité d'affichage et auxdits moyens d'entrée ainsi qu'à des deuxièmes moyens de connexion électrique à au moins un autre circuit logique programmable appartenant à une cellule voisine.

Grâce aux caractéristiques du dispositif selon l'invention, ce dernier est formé par une pluralité de cellules ayant chacune un circuit logique programmable qui peut gérer et traiter localement des données relatives à l'unité d'affichage de la cellule et des moyens d'entrée d'informations également associés à la cellule. La surface d'affichage considérée du dispositif est ainsi décomposée en zones d'affichage partielles qui sont distinctes et gérées au moins en majeure partie localement par des circuits logiques programmables. De même, la réception des informations par les moyens d'entrée prévus est effectuée localement par les cellules.

Selon un mode de réalisation préféré, au moins l'ensemble des cellules internes de la zone d'affichage considérée, c'est-à-dire les cellules ne formant pas les rangées au bord de cette surface d'affichage, sont fonctionnellement identiques. De préférence, les unités d'affichage de ces cellules internes sont matériellement identiques et les moyens d'entrée de données des cellules internes sont identiques ou équivalents. Par le fait que ces cellules sont fonctionnellement identiques, chacune d'elle peut fonctionnellement en remplacer une autre. Cette caractéristique permet ainsi d'implémenter des programmes d'application permettant une autoréparation du dispositif d'affichage, par une délocalisation de certaines fonctions ne pouvant plus être assurées par des cellules défectueuses. Concernant les systèmes électroniques programmables capables d'auto-réparation et d'auto-réplication, on renvoie ici l'homme du métier au brevet américain US 5,508,636.

De préférence, les circuits logiques sont reprogrammables. Dans une variante, ils ont en mémoire plusieurs configurations pouvant être sélectionnées en fonction de diverses applications et/ou diverses configurations prévues.

Selon une variante préférée, le circuit logique de chaque cellule est relié électriquement aux circuits logiques des cellules adjacentes, c'est-à-dire des cellules ayant des côtés situés vis-à-vis de la cellule considérée. Ainsi, une interaction entre les cellules au niveau électronique peut être réalisé selon diverses directions et le passage d'informations dans le dispositif d'affichage peut être réalisé selon divers chemins, ce qui augmente la robustesse du système au niveau électronique et permet d'implémenter des applications particulières dans lesquelles notamment l'information affichée évolue sur la base de plusieurs traitements locaux par les cellules de base.

Selon un mode de réalisation particulier, la pluralité de cellules est répartie en plusieurs modules distincts comprenant chacun au moins une cellule, ces modules étant assemblés pour former la surface d'affichage. Ainsi, en variant le nombre de modules, on peut varier la surface d'affichage. De plus il est également possible de varier la géométrie de l'affichage. Le module peut présenter une forme rectangulaire ou carré, mais également une forme hexagonale. Selon deux variantes différentes, on peut prévoir que les modules sont assemblés de manière définitive ou séparable. L'agencement du dispositif d'affichage selon l'invention avec une pluralité de cellules fonctionnelles permet ainsi de fabriquer des modules définissant matériellement une structure de base, modules qui peuvent ensuite être assemblés selon les besoins et l'application choisie.

Pour chaque cellule, les moyens d'entrée d'information, l'unité d'affichage et le circuit logique programmable peuvent être matériellement agencés de diverses manières que l'homme du métier peut concevoir en fonction des dimensions souhaitées et des applications envisagées. En particulier, il est possible d'intégrer dans une même unité matérielle les moyens d'affichage d'une cellule et le circuit logique associé à cette cellule. Les moyens d'entrée de données peuvent être agencés au-dessus ou au-dessous des moyens d'affichage. Dans le cas où ces moyens d'entrée sont agencés au-dessus des moyens d'affichage, ils sont constitués de capteurs ou de transducteurs en matériau(x) au moins partiellement transparent(s) à la lumière émise ou réfléchie par les moyens d'affichage.

Le concept à la base de la présente invention permet de définir la notion de "tissu électronique", lequel est formé par une pluralité de cellules de base dont les circuits électroniques forment un réseau électronique distribué qui s'étend dans le "tissu". Il est possible d'augmenter ou de diminuer la surface de ce "tissu". On peut à la limite usiner ou "couper" ce tissu pour obtenir une forme désirée à partir d'un dispositif standard. Ainsi, il est possible d'élaborer des objets à trois dimensions et, dans le cas d'une structure flexible et mince, on peut imaginer confectionner des objets d'art ou même des vêtements. Le réseau électronique peut être programmé pour tester lui-même la configuration finale du dispositif d'affichage et définir en conséquence la fonction de chaque cellule du "tissu électronique". On peut également intégrer un protocole de test du fonctionnement des cellules et permettre une autoréparation par délocalisation au moins partielle de l'information affichée ou de l'information reçue en entrée.

Le dispositif d'affichage selon la présente invention sera décrit plus en détail dans la description suivante de modes de réalisation, donnés à titre d'exemple nullement limitatif, faite à l'aide du dessin annexé dans lequel :
- la figure 1 représente une vue schématique éclatée d'un premier mode de réalisation d'un dispositif d'affichage selon l'invention;
- la figure 2 représente schématiquement une cellule d'affichage définissant un élément fonctionnel de base du dispositif représenté à la figure 1.
- la figure 3 représente une vue schématique éclatée d'un deuxième mode de réalisation d'un dispositif d'affichage étendu selon l'invention, et
- la figure 4 représente une vue schématique de la plaque à circuits imprimés supportant les circuits logiques d'un module du dispositif de la figure 3.

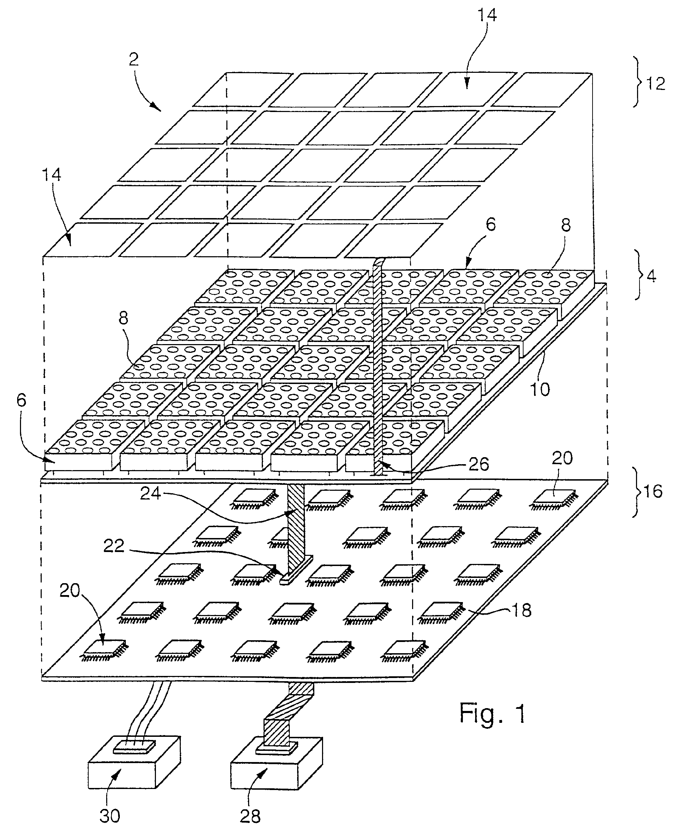

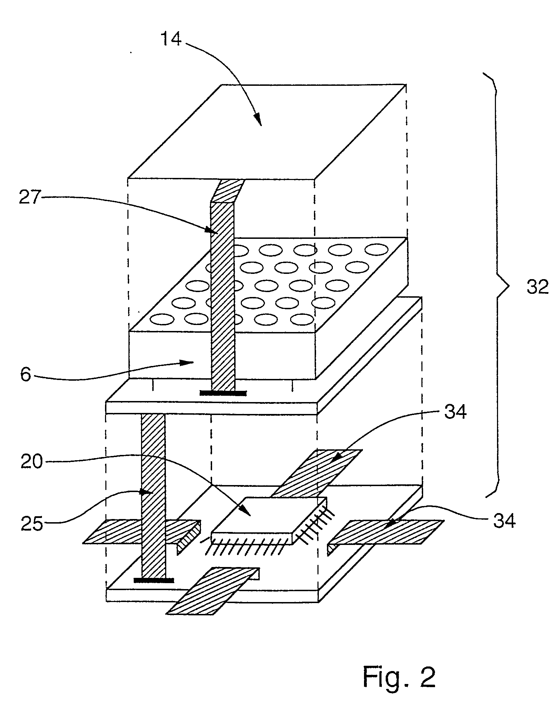

A l'aide des figures 1 et 2, on décrira ci-après un premier mode de réalisation de l'invention. Le dispositif électronique d'affichage électro-optique 2 comprend une couche d'affichage 4 intermédiaire entre une couche d'entrée d'informations 12 et une couche électronique interne 16. La couche d'affichage 4 comprend plusieurs unités d'affichage électro-optique 6 formées chacune d'une pluralité de diodes luminescentes 8. Les unités 6 sont agencées sur un substrat 10. On notera que les unités 6 peuvent être de diverses natures et formées notamment par des cellules à cristaux liquides ou par d'autres moyens d'affichage connus de l'homme du métier.

Au-dessus de la couche 4 est agencée une couche supérieure ou externe 12 d'entrée d'informations dans laquelle sont agencés des capteurs transparents 14, notamment du type piézoélectrique ou capacitif, ou des contacteurs électriques activés par une pression exercée sur ceux-ci. Les capteurs 14 peuvent présenter des dimensions égales à celles de la surface supérieure des cellules 6 ou présenter des dimensions inférieures à celles-ci. Toutefois, de préférence, les cellules 6 et les capteurs 14 sont agencés de manière uniforme dans leur couche respective.

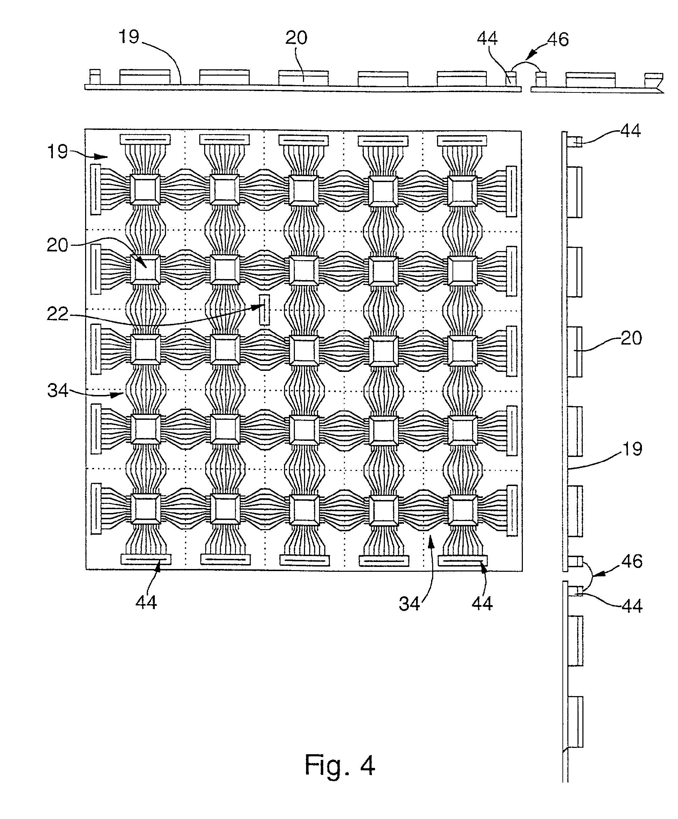

Au-dessous de la couche d'affichage 4 est prévue une couche électronique interne 16 dans laquelle sont agencés des circuits logiques programmables 20, de préférence reprogrammables, qui sont distribués régulièrement sur un substrat 18 formant une plaque avec des circuits imprimés notamment tels que représentés à la figure 4. Il est prévu un nombre identique de circuits 20, de cellules 6 et de capteurs 14. Selon l'invention, chaque cellule d'affichage 6 et le capteur d'entrée d'informations 14 correspondant, c'est-à-dire superposé à cette unité 6, sont associés à un circuit logique 20 auquel ils sont reliés électriquement. Ensuite, les circuits logiques 20 sont reliés localement à plusieurs autres circuits logiques situés dans leur voisinage, c'est-à-dire dans la région périphérique de ceux-ci. De préférence, chaque circuit 20 est relié avec l'ensemble des circuits 20 adjacents qui présentent un côté situé en face de l'un des côtés du circuit 20 considéré. Dans le cadre du dispositif représenté à la figure 1, les circuits logiques internes, c'est-à-dire les circuits ne formant pas les rangées de circuits en bordure de la plaque 18, sont reliés électriquement de manière semblable à quatre circuits adjacents comme cela est représenté schématiquement à la figure 4.

Par exemple, les circuits 20 sont du type FPGA (Field Programmable Gate Array). Chaque circuit 20 est agencé pour garder en mémoire au moins des instructions reçues lors du démarrage d'un programme. Dans une variante, le circuit 20 peut être associé à une mémoire du type ROM dans laquelle diverses configurations peuvent être au moins partiellement enregistrés et gardés en mémoire.

Ainsi, selon l'invention, le dispositif 2 définit une pluralité de cellules de base 32 représentées schématiquement à la figure 2. Chaque cellule 32 comprend une cellule d'affichage élémentaire 6, un capteur 14 qui lui est superposé et un circuit logique 20 également agencé en superposition avec la cellule 6. Le circuit 20 d'une cellule 32 est relié électriquement par un conducteur 25 d'une part à la cellule correspondante 6 et d'autre part aux capteurs correspondants 14 au moyen d'un conducteur 27. De plus, chaque circuit 20 est relié électriquement par des moyens de connexion 34 aux circuits voisins de manière à définir un réseau de circuits distribués uniformément, de manière équivalente aux cellules d'affichage 6. Comme cela ressort de la figure 1, les connexions électriques entre les diverses couches peuvent être réalisées de manière groupée. Ainsi, chaque circuit 20 est relié à la cellule 6 correspondante et au capteur 14 correspondant par l'intermédiaire d'un conducteur multifil 24 introduit dans un connecteur 22 prévu à cet effet dans la plaque 18 et d'un conducteur multifil 26 reliant électriquement la couche 4 et la couche 12. De multiples variantes de connexion électrique peuvent être prévues par l'homme du métier. Certains fils conducteurs peuvent être partagés. La couche 12 peut être liée à la couche 16 indépendamment de la liaison électrique entre cette couche 16 et la couche intermédiaire 4.

On notera encore que le substrat 10 peut former également un circuit imprimé présentant des plages de connexion électrique pour les cellules 6 et éventuellement pour les capteurs 14. On remarquera que les couches 4 et 16 peuvent être spatialement confondues. On peut par exemple prévoir des ouvertures dans le substrat 10 pour permettre aux circuits 20 d'être logés directement sous les éléments d'affichage 8. Ainsi, on peut diminuer l'épaisseur du dispositif. Dans une autre variante, on peut prévoir d'agencer les circuits 20 et les cellules 6 sur un même substrat définissant un circuit imprimé, lequel peut notamment présenter plusieurs couches de pistes. Tous ces éléments peuvent être rigides ou au moins partiellement flexibles.

L'agencement uniforme des circuits 20 et en particulier les interconnexions homogènes entre leurs circuits permet d'obtenir un affichage pouvant être autoréparé et également présenter diverses configurations. Chaque cellule peut réaliser l'ensemble des fonctions prévues de sorte que chacune de ces cellules est à même de remplacer la fonction d'une autre cellule. Il est ainsi possible de configurer électroniquement le dispositif sans limitation liée à l'agencement électronique du dispositif. L'agencement du dispositif selon l'invention permet notamment d'étendre celui-ci de manière à varier ses dimensions et/ou sa géométrie, comme cela sera décrit notamment dans le cadre du deuxième mode de réalisation de l'invention.

De préférence, la pluralité de cellules fonctionnelles 32 formant le dispositif selon l'invention sont identiques. Toutefois, dans certaines variantes de réalisation, les cellules externes définissant les rangées de cellules au bord du dispositif d'affichage peuvent présenter des différences, notamment relatives à la géométrie des cellules 6. Ainsi, dans les modes de réalisation préférés, au moins l'ensemble des cellules internes, c'est-à-dire non situées au bord du dispositif, ont des unités d'affichage identiques, des moyens d'entrée identiques ou fonctionnellement équivalents et des circuits logiques identiques ou fonctionnellement équivalents. De plus, ces cellules internes sont reliées de manière similaire aux cellules situées dans leur voisinage.

On notera que le dispositif d'affichage selon la présente invention peut former une partie seulement d'un dispositif d'affichage présentant une surface d'affichage plus vaste dont une partie n'est pas constituée par une pluralité de cellules de base définies dans le cadre de la présente invention. Ainsi, le dispositif selon l'invention ne forme pas nécessairement un tout autonome, mais il peut être intégré dans un dispositif ou un système combinant divers types d'affichage et également des technologies différentes. En particulier, l'homme du métier peut concevoir un dispositif d'affichage dont seule une partie de la surface d'affichage présente des capteurs d'entrée, mais présentant par exemple une structure homogène pour ce qui concernent les couches 4 et 16. Les fonctions et caractéristiques d'un tel dispositif d'affichage sont globalement plus limitées que pour le dispositif selon l'invention en tant que tel, ce dispositif présentant les avantages et caractéristiques de la présente invention seulement partiellement. Pour de nombreuses applications, de tels dispositifs d'affichage "mixte" peuvent être suffisants. Toutefois, ces dispositifs d'affichage "mixte" présentent une limitation quant à une extension possible de la surface d'affichage et à un changement de configuration de la surface d'affichage pour un programme ou une application donnée.

A la figure 1, il est prévu une unité de programmation 28, servant aussi de moyens de synchronisation pour les circuits électroniques 20 et permettant de charger un programme dans le dispositif 2. L'unité de programmation 28 peut également servir à la configuration du dispositif en fonction des dimensions de celui-ci et de l'application sélectionnée. Ainsi, l'unité 28 a essentiellement une fonction initiale au démarrage de l'application, le traitement des données provenant des capteurs 14 et les signaux de commande envoyés aux cellules 6 étant effectués localement par les circuits logiques 20. En effet, contrairement aux dispositifs de l'art antérieur, il est prévu un traitement local des informations reçues et de l'affichage, la cellule de base 32 formant une cellule fonctionnelle comprenant sa propre unité électronique pour traiter l'information reçue par le capteur qui lui est associé et pour commander la cellule d'affichage 6 correspondante. Finalement, une alimentation 30 est prévue pour alimenter électriquement les diverses couches du dispositif 2.

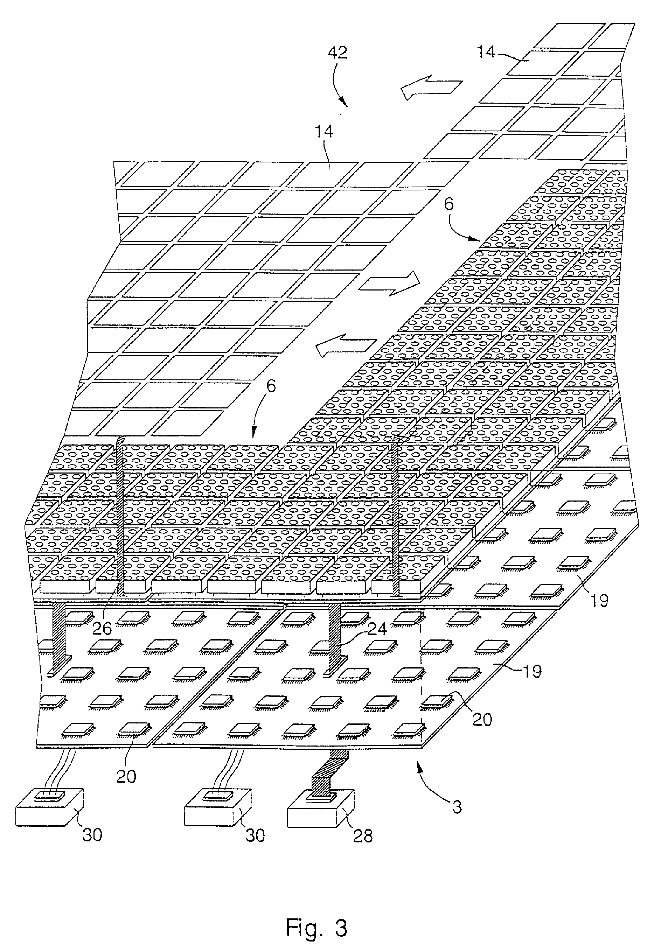

Aux figures 3 et 4 est représenté un deuxième mode de réalisation d'un dispositif d'affichage 42 selon l'invention. Ce deuxième mode de réalisation se distingue essentiellement du premier mode en ce qu'il est formé d'un ensemble de modules d'affichage 3 correspondant essentiellement au dispositif 2 du premier mode de réalisation décrit ci-avant. Ainsi, les divers éléments ne seront pas décrits à nouveau ici en détail.

On notera premièrement que le dispositif 42 est associé à une seule unité de programmation 28 alors qu'il est alimenté par plusieurs alimentations 30 associées respectivement aux modules d'affichage. Les différents modules 3 sont assemblés les uns aux autres pour définir une surface d'affichage homogène. De préférence, les modules sont identiques ou fonctionnellement équivalents. Toutefois, on peut prévoir que les cellules de base situées en bordure du dispositif d'affichage ne soient pas identiques aux cellules internes. Toutefois, au niveau fonctionnel, toutes les cellules sont de préférence équivalentes. Les plaques 19 sur lesquelles sont agencés les circuits logiques 20 présentent en bordure des connecteurs 44 pour permettre de connecter électriquement les circuits 20 formant les rangées au bord d'une plaque 19 avec les circuits logiques 20 formant des rangées au bord des plaques 19 respectives des modules adjacents. Des conducteurs électriques multifils 46 sont prévus pour établir cette connexion électrique entre modules.

Ainsi, toutes les cellules internes du dispositif 42 sont connectées électriquement aux cellules voisines de manière similaire. Dans le présent cas, chaque circuit 20 est relié électriquement à quatre circuits adjacents situés respectivement en face de ses quatre côtés, comme représenté à la figure 4.

Les modules peuvent être assemblés de manière définitive ou séparable. Cet agencement modulaire du dispositif d'affichage 42 permet de varier aisément l'étendue de la surface d'affichage et l'agencement électronique distribué uniformément dans les cellules de base permet de modifier aisément la configuration de l'affichage et de varier ainsi notamment facilement la répartition des éléments affichés pour un programme ou une application donnée.

## Revendications

1. Dispositif électronique d'affichage (2; 42) comprenant une pluralité de cellules (32) accolées dont les faces supérieures définissent ensemble une surface d'affichage et ayant chacune une unité d'affichage électro-optique (6), des moyens d'entrée (14) d'au moins une information superposés à ladite unité d'affichage et un circuit logique programmable (20) associé à des premiers moyens de connexion électrique (24, 26; 25, 27) à ladite unité d'affichage et auxdits moyens d'entrée ainsi qu'à des deuxièmes moyens de connexion électrique (34) à plusieurs autres circuits logiques appartenant aux cellules voisines.

2. Dispositif d'affichage selon la revendication 1, dans lequel ladite pluralité de cellules est formée d'un premier ensemble de cellules internes et d'un deuxième ensemble de cellules externes définissant des rangées de cellules au bord du dispositif d'affichage, **caractérisé en ce qu'**au moins l'ensemble des cellules internes ont des unités d'affichage identiques, des moyens d'entrée identiques ou fonctionnellement équivalents et des circuits logiques identiques ou fonctionnellement équivalents.

3. Dispositif d'affichage selon la revendication 2, **caractérisé en ce que** l'unité d'affichage (6) de chaque cellule interne présente N côtés, N étant un nombre entier supérieur à deux, le circuit logique correspondant étant relié par lesdits deuxièmes moyens de connexion aux N circuits logiques respectifs des N cellules adjacentes dont les unités d'affichage présentent chacune un côté situé en face de l'un desdits N côtés.

4. Dispositif d'affichage selon l'une des revendications précédentes, **caractérisé en ce que** ladite pluralité de cellules (32) est repartie en plusieurs modules distincts (3) comprenant chacun au moins une cellule, ces modules étant assemblés et reliés électriquement pour former ladite surface d'affichage.

5. Dispositif d'affichage selon la revendication 4, **caractérise en ce que** lesdits modules sont assemblés de manière séparable.

6. Dispositif d'affichage selon l'une des revendications précédentes, **caractérisé en ce que** lesdites unités d'affichage de ladite pluralité de cellules définissent ensemble une structure uniforme, et **en ce que** lesdits moyens d'entrée de ladite pluralité de cellules définissent ensemble une couche uniforme.

7. Dispositif d'affichage selon l'une des revendications précédentes, **caractérisé en ce que** lesdits moyens d'entrée sont formés par des capteurs ou transducteurs en matériau(x) au moins partiellement transparent(s) à la lumière émise ou réfléchie par l'unité d'affichage correspondante et sont situés au-dessus de cette dernière.

8. Dispositif d'affichage selon l'une des revendications précédentes, **caractérisé en ce qu'**il est formé par une structure bidimensionnelle flexible.

9. Module électronique d'affichage (3) formé d'au moins une cellule (32) comprenant une unité d'affichage électro-optique (6) agencée pour émettre ou réfléchir de la lumière du côte de sa face supérieure, des moyens d'entrée (14) d'au moins une information superposés à ladite unité d'affichage et un circuit logique programmable (20) associé à des premiers moyens de connexion électrique (24, 26) à ladite unité d'affichage et auxdits moyens d'entrée ainsi qu'à des deuxièmes moyens de connexion électrique (34, 44) à plusieurs circuits logiques programmables d'autres cellules identiques ou similaires, ce module électronique étant agencé pour être assemblé à d'autres modules identiques ou similaires et former ensemble un dispositif d'affichage.

10. Module d'affichage selon la revendication 9, **caractérisé en ce qu'**il présente du côté de sa face supérieure une surface d'affichage uniforme.
